Europäisches Patentamt

European Patent Office

Office européen des brevets

(19)

(11) **EP 1 426 872 A2**

(12) # EUROPEAN PATENT APPLICATION

(43) Date of publication:
**09.06.2004 Bulletin 2004/24**

(51) Int Cl.[7]: **G06F 17/14**

(21) Application number: **03027181.1**

(22) Date of filing: **27.11.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br>• **Saha, Kaushik**<br>  **Shamnath Marg Dehli - 110 054 (IN)**<br>• **Maiti, Srijib Narayan**<br>  **Saratpalli Midnapore - 721101, W.B. (IN)** |
| (30) Priority: **03.12.2002 IN DE12082002** | (74) Representative: **Bosotti, Luciano et al**<br>**c/o Buzzi, Notaro & Antonielli d'Oulx**<br>**Via Maria Vittoria 18**<br>**10123 Torino (IT)** |
| (71) Applicant: **STMicroelectronics Ltd.**<br>**Uttar Pradesh (IN)** | |

(54) **Linear scalable FFT/IFFT computation in a multi-processor system**

(57)    This invention relates to a linear scalable method for computing a Fast Fourier Transform (FFT) or Inverse Fast Fourier transform (IFFT) in a multiprocessing system using a decimation in time approach. Linear scalability means, as the number of processors increases by a factor P (for example), the computational cycle reduces by exactly the same factor P. The invention comprises computing the first two stages of an N-point FFT/IFFT as a single radix-4 butterfly computation operation while implementing the remaining ($\log_2 N$-2) stages as radix-2 operations, fusing the 3 main nested loops of each radix-2 butterfly stage into a single radix-2 butterfly computation loop, and distributing the computation of the butterflies in each stage such that each processor computes an equal number of complete butterfly calculations thereby eliminating data interdependency in the stage.

**Figure 2. Butterfly distribution for 2-processor configuration**

EP 1 426 872 A2

# Description

## Field of the invention

The present invention relates to the field of digital signal processing. More particularly the invention relates to linearly scalable FFT/IFFT computation in a multiprocessor system.

## Background of the invention

The class of fourier transforms that refer to signals that are discrete and periodic in nature are known as Discrete Fourier Transforms (DFT). The discrete Fourier transform (DFT) plays a key role in digital signal processing in areas such as spectral analysis, frequency domain filtering and polyphase transformations.

The DFT of a sequence of length N can be decomposed into successively smaller DFTs. The manner in which this principle is implemented falls into two classes. The first class called "decimation in time" and the second called "decimation in frequency". The first derives its name from the fact that in the process of arranging the computation into smaller transformations the sequence x(n) (the index 'n' is often associated with time) is decomposed into successively smaller subsequences. In the second general class the sequence of DFT coefficients x(k) is decomposed into smaller subsequences (k denoting frequency). The present invention employs "decimation in time".

Since the amount of storing and processing of data in numerical computation algorithms is proportional to the number of arithmetic operations, it is generally accepted that a meaningful measure of complexity, or of the time required to implement a computational algorithm, is the number of multiplications and additions required. The direct computation of the DFT requires $4N^2$ real multiplications and $N(4N-2)$ real additions. Since the amount of computation and thus the computation time is approximately proportional to $N^2$ it is evident that the number of arithmetic operations required to compute the DFT by the direct method becomes very large for large values of N. For this reason, computational procedures that reduce the number of multiplications and additions are of considerable interest. The Fast Fourier Transform (FFT) is an efficient algorithm for computing the DFT.

The conventional method of implementing an FFT or Inverse Fourier Transform (IFFT) uses a radix-2 / radix-4 / mixed-radix approach =with either "decimation in time (DIT)" or a "decimation in frequency (DIF)" approach..

The basic computational block is called a "butterfly" ---- a name derived from the appearance of flow of the computations involved in it. Fig.-1 shows a typical radix-2 butterfly computation. 1.1 represents the 2 inputs (referred to as the "odd" and 'even" inputs) of the butterfly and 1.2 refers to the 2 outputs. One of the inputs (in this case the odd input) is multiplied by a complex quantity called the twiddle factor ($W_N^k$). The general equations describing the relationship between inputs and outputs is as follows:

$$X[k] = x[n] + x[n+N/2]W_N^k$$

$$X[k+N/2] = x[n] - x[n+N/2]W_N^k$$

An FFT butterfly calculation is implemented by a z-point data operation wherein 'z' is referred to as the "radix". An 'N' point FFT employs $N/z$ butterfly units per stage (block) for $\log_z N$ stages. The result of one butterfly stage is applied as an input to one or more subsequent butterfly stages.

Computational complexity for an N-point FFT calculation using the radix-2 approach = $O(N/2 * \log_2 N)$ where N is the length of the transform. There are exactly $N/2 * \log_2 N$ butterfly computations, each comprising 3 complex loads, 1 complex multiply, 2 complex adds and 2 complex stores. A full radix-4 implementation on the other hand requires several complex load/store operations. Since only 1 store operation and 1 load operation are allowed per bundle of a typical VLIW processor, cycles are wasted in doing only load/store operations, thus reducing ILP (Instruction Level parallelism). The conventional nested loop approach requires a high looping overhead on the processor. It also makes application of standard optimization methods difficult. Due to the nature of the data dependencies of the conventional FFT/IFFT implementations, multi cluster processor configurations do not provide much benefit in terms of computational cycles.

While the complex calculations are reduced in number, the time taken on a normal processor can still be quite large. It is therefore necessary in many applications requiring high-speed or real-time response to resort to multiprocessing in order to reduce the overall computation time. For efficient operation, it is desirable to have the computation linearly scalable --- in other words the computation time reducing in inverse proportion to the number of processors in the multiprocessing solution. Current multiprocessing implementations of FFT/IFFT however, do not provide such a linear scalability.

US patent 6,366,936 describes a multiprocessor approach for efficient FFT. The approach defined is a pipelined process wherein each processor is dependent on the output of the preceding processor in order to perform its share of work. The increase in throughput is not linear as compared to the number of processors employed in the operation.

US patent 5,293,330 describes a pipelined processor for mixed size FFT. Here too, the approach does not provide linear scalability in throughput, as it is pipelined.

A scheme for parallel FFT/IFFT as described in "Parallel 1-D FFT Implementation with TMS320C4x DSPs" by the semiconductor group-Texas Instruments, uses butterflies that are distributed between two processors. In this implementation, inter processor communication is required because subsequent computations on one processor depend on intermediate results from other processors. Every processor computes a butterfly operation on each of the butterfly pairs allocated to it and then sends half of its computed result to the processor that needs it for the next computation step and then waits for the information of the same length from another node to arrive before continuing computation. This interdependence of processors for a single butterfly computation does not support linear increase in output with increase in the number of processors.

**Summary of the invention:**

The object of the present invention is to overcome the above drawbacks and provide linear scalability of throughput in a multiprocessor system.

To achieve the aforementioned objective, the present invention provides a modified arrangement for enabling the parallel computation of different butterflies in different processors.

The invention provides a linear scalable method for computing a Fast Fourier Transform (FFT) or Inverse Fast Fourier transform (IFFT) in a multiprocessing system using a Decimation in Time approach, comprising the steps of:

- computing the first two stages of an N-point FFT/ IFFT as a single radix-4 butterfly computation operation while implementing the remaining ($\log_2 N$-2) stages as radix-2 operations,- fusing the 3 main nested loops of each radix-2 butterfly stage into a single radix-2 butterfly computation loop, and
- distributing the computation of the butterflies in each sage such that each processor computes an equal number of complete butterfly calculations thereby eliminating data interdependency in the stage.

The said distribution of butterfly computation is implemented by assigning the memory locations addresses corresponding to the inputs and outputs required for each specific butterfly calculations to a selected processor.

The instant invention also provides a linear scalable system for computing a Fast Fourier Transform (FFT) or Inverse Fast Fourier transform (IFFT) in a multiprocessing system using a Decimation in Time approach, comprising:

- means for computing the first two stages of an N-point FFT/IFFT as a single radix-4 butterfly computation operation while implementing the remaining ($\log_2 N$-2) stages as radix-2 operations,
- means for fusing the 3 main nested loops of each radix-2 butterfly stage into a single radix-2 butterfly computation loop, and
- means for distributing the computation of the butterflies in each stage such that each processor computes an equal number of complete butterfly calculations thereby eliminating data interdependency in the stage.

The said means for distributing the computation of the butterflies is implemented by means for assigning the memory locations addresses corresponding to the inputs and outputs required for specific butterfly calculations to the selected processor.

Further, the invention provides a computer program product comprising computer readable program code stored on a computer readable storage medium embodied therein for computing a Fast Fourier Transform (FFT) or Inverse Fast Fourier transform (IFFT) in a multiprocessing system using a Decimation in Time approach, comprising:

- computer readable program code means configured for computing the first two stages of an N-point FFT/IFFT as a single radix-4 butterfly computation operation while implementing the remaining ($\log_2 N$-2) stages as radix-2 operations,
- computer readable program code means configured for fusing the 3 main nested loops of each radix-2 butterfly stage into a single radix-2 butterfly computation loop, and
- computer readable program code means configured for distributing the computation of the butterflies in each stage such that each processor computes an equal number of complete butterfly calculations thereby eliminating data interdependency in the stage.

The said computer readable program code means configured for distributing the computation of the butterflies is implemented by computer readable program code means configured for assigning the memory locations addresses corresponding to the inputs and outputs required for specific butterfly calculations to a selected processor.

**Brief Description of the Drawings:**

The present invention will now be explained with reference to the accompanying drawings, which are given only by way of illustration and are not limiting for the present invention.

Fig 1 shows the basic structure of the signal flow in a radix-2 butterfly computation for a discrete Fourier transform.

Fig 2     shows a 2-processor implementation of butterflies for an 8-point FFT, in accordance with the present invention.

Fig 3     shows a 4-processor implementation of butterflies for an 8-point FFT, in accordance with the present invention.

**Detailed Description of the Drawings:**

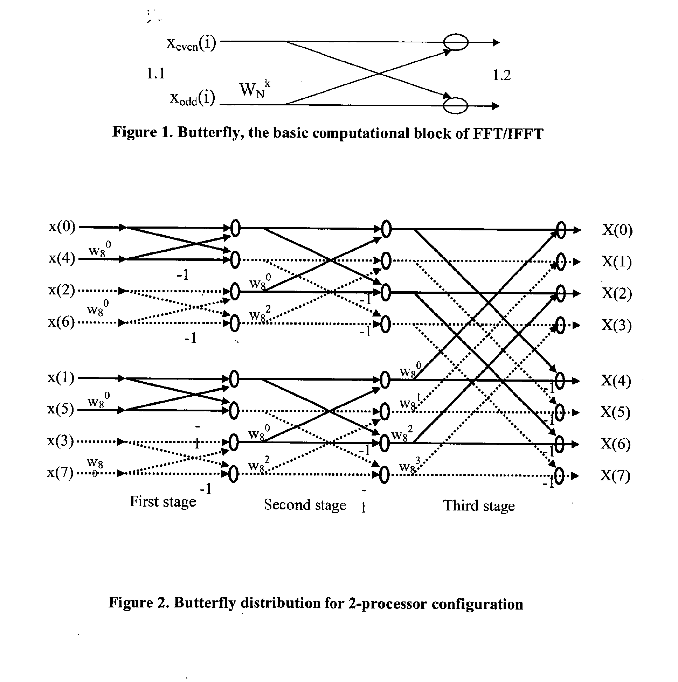

**Fig. 1** has already been described in the background to the invention.

**Fig 2** shows the implementation for an 8 point FFT in a 2-processor architecture using the present invention. Dotted lines are computed in one processor, and dashed lines in the other. The computational blocks are represented by '0'. The left side of each computational block is its input (the time domain samples) while the right side is its output (transformed samples). The present invention uses a mixed radix approach with decimation in time. The first two stages of the radix-2 FFT/IFFT are computed as a single radix-4 stage. As these stages contain only load/stores and add/subtract operations there is no need for multiplication. This leads to reduced time for FFT/IFFT computation as compared to that with full radix-2 implementation. The next stage has been implemented as a radix-2. The three main nested loops of conventional implementations have been fused into a single loop which iterates $(N/2*(\log_2 N-2))/$ (number of processor) times. Each processor is used to compute one butterfly in one loop iteration. Since there is no data dependency between different butterflies in this algorithm, the computational load can be linearly divided among the different processors, leading to the linear scalability.

The mechanism for assigning the butterflies in this manner consists of assigning the memory location to a processor such that each processor computes a complete butterfly. To achieve this a binary digit is inserted at the appropriate bit location in the address of the memory location for input/output data for the computation of the butterfly, depending on the stage of the FFT transformation.

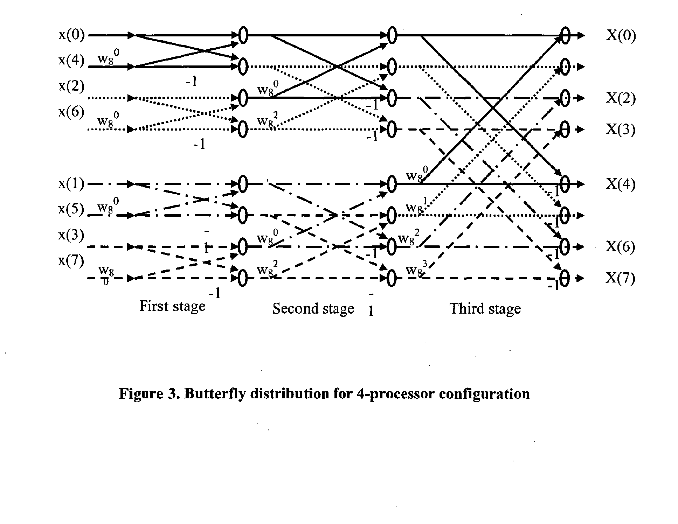

**Fig 3** shows a 4-processor implementation for the 8-point FFT using this invention. Different line styles represent computation in each of the 4 processors.

In the present implementation of the invention each processor comprises of one or more ALUs (Arithmetic Logic unit), multiplier units, data cache, and load/store units. All processors share a common instruction cache, multi-port memory. Very Large Instruction Word (VLIW) processors are representative of such architectures and can be used for meeting these requirements.

It will be apparent to those with ordinary skill in the art that the foregoing is merely illustrative intended to be exhaustive or limiting, having been presented by way of example only and that various modifications can be made within the scope of the above invention.

Accordingly, this invention is not to be considered limited to the specific examples chosen for purposes of disclosure, but rather to cover all changes and modifications, which do not constitute departures from the permissible scope of the present invention. The invention is therefore not limited by the description contained herein or by the drawings, but only by the claims.

**Claims**

1. A linear scalable method for computing a Fast Fourier Transform (FFT) or Inverse Fast Fourier transform (IFFT) in a multiprocessing system using a decimation in time approach, comprising the steps of:

 - computing the first two stages of an N-point FFT/IFFT as a single radix-4 butterfly computation operation while implementing the remaining ($\log_2 N$-2) stages as radix-2 operations,- fusing the 3 main nested loops of each radix-2 butterfly stage into a single radix-2 butterfly computation loop, and
 - distributing the computation of the butterflies in each sage such that each processor computes an equal number of complete butterfly calculations thereby eliminating data interdependency in the stage.

2. A linear scalable method as claimed in claim 1 wherein said distribution of butterfly computation is implemented by assigning the memory locations addresses corresponding to the inputs and outputs required for each specific butterfly calculations to a selected processor.

3. A linear scalable system for computing a Fast Fourier Transform (FFT) or Inverse Fast Fourier transform (IFFT) in a multiprocessing system using a decimation in time approach, comprising:

 - means for computing the first two stages of an N-point FFT/IFFT as a single radix-4 butterfly computation operation while implementing the remaining ($\log_2 N$-2) stages as radix-2 operations,
 - means for fusing the 3 main nested loops of each radix-2 butterfly stage into a single radix-2 butterfly computation loop, and
 - means for distributing the computation of the butterflies in each stage such that each processor computes an equal number of complete butterfly calculations thereby eliminating data interdependency in the stage.

4. A linear scalable system as claimed in claim 3 wherein said means for distributing the computation of the butterflies is implemented by means for assigning the memory locations addresses corresponding to the inputs and outputs required for specific butterfly calculations to the selected processor.

5. A computer program product comprising computer readable program code stored on a computer readable storage medium embodied therein for computing a Fast Fourier Transform (FFT) or Inverse Fast Fourier transform (IFFT) in a multiprocessing system using a decimation in time approach, comprising:

- computer readable program code means configured for computing the first two stages of an N-point FFT/IFFT as a single radix-4 butterfly computation operation while implementing the remaining ($\log_2 N-2$) stages as radix-2 operations,
- computer readable program code means configured for fusing the 3 main nested loops of each radix-2 butterfly stage into a single radix-2 butterfly computation loop, and
- computer readable program code means configured for distributing the computation of the butterflies in each stage such that each processor computes an equal number of complete butterfly calculations thereby eliminating data interdependency in the stage.

6. The computer program product as claimed in claim 5 wherein said computer readable program code means configured for distributing the computation of the butterflies is implemented by computer readable program code means configured for assigning the memory locations addresses corresponding to the inputs and outputs required for specific butterfly calculations to a selected processor.

**Figure 1. Butterfly, the basic computational block of FFT/IFFT**

**Figure 2. Butterfly distribution for 2-processor configuration**

**Figure 3. Butterfly distribution for 4-processor configuration**